Europäisches Patentamt

European Patent Office

Office européen des brevets

(19)

(11) Publication number: **0 120 715**
**A2**

(12)

# EUROPEAN PATENT APPLICATION

(21) Application number: **84302149.4**

(22) Date of filing: **29.03.84**

(51) Int. Cl.³: **G 01 N 21/03**
**B 01 L 3/00**

(30) Priority: **29.03.83 GB 8308554**

(43) Date of publication of application:
**03.10.84 Bulletin 84/40**

(84) Designated Contracting States:
**CH DE FR GB IT LI SE**

(71) Applicant: **Hyslop, Christopher Paul**
**11 Hylands Close**
**Furnace Green Crawley Sussex(GB)**

(72) Inventor: **Hyslop, Christopher Paul**
**11 Hylands Close**
**Furnace Green Crawley Sussex(GB)**

(74) Representative: **Tomlinson, Kerry John et al,**
**Frank B. Dehn & Co. European Patent Attorneys Imperial**
**House 15-19 Kingsway**
**London WC2B 6UZ(GB)**

(54) Optical measuring cells.

(57) An optical measuring cell comprises an elongate base member 1 having a channel formed in one face thereof and a transparent cover 4 fixed to the base member over the channel over at least part of the length of the base member, the channel being dimensioned such that in use fluid to be tested may be drawn by capillary action into the channel. The base member is reflective so that light passing through the cover and fluid is reflected to pass again through the fluid and cover. The cell may be used for the determination of the concentration of haemoglobin in undiluted blood samples.

Fig. 1

EP 0 120 715 A2

Croydon Printing Company Ltd.

9YB2-446

## Optical Measuring Cells

This invention relates to cells for use in the analysis of small quantities of fluid by means of light passing through the fluid.

A common medical diagnostic test is the determination of a substance in a body fluid, e.g. sugars, proteins, hormones or haemoglobin in urine or blood. In one common technique an indicator "stick" consisting of a long thin carrier of paper or other suitable material impregnated with a reagent is dipped in a sample of fluid. The stick is then washed and the colour of the stick indicates the level of the substance to be determined. The colour may be determined by comparing the stick with a calibrated colour chart or alternatively machines are available for determining the colour opto-electronically. For example, a small portable machine is available which has a slot into which the indicator stick may be inserted, a light source directed at the stick and a light sensor and associated electronic circuit and indicator for determining the amount of light of a predetermined wavelength reflected from the stick.

In another measurement method, suitable for determining haemoglobin, a cuvette containing a reagent is filled with blood and the optical density of the resulting mixture is measured by shining light through the filled cuvette and measuring the proportion of light transmitted.

According to the present invention there is provided an optical measuring cell comprising an elongate base member having a channel formed in one face thereof and a transparent cover fixed to the base member over the channel over at least part of the length of the base member, the channel being dimensioned such that in use fluid to be tested may be drawn by capillary action into the channel and the base
member being reflective so that light passing through
the cover and fluid is reflected to pass again through
the fluid and cover.

According to a further feature of the invention
there is provided a method of optically analysing
a fluid which comprises placing an optical measuring
cell as defined above in the fluid whereby the fluid
is drawn by capillary action into the channel, passing
light through the transparent cover into the channel
and analysing the light reflected back through the
transparent cover.

A measuring cell according to the invention
has the advantages that it is easy and economical
to produce and the use of the reflection arrangement
enables an existing measurement apparatus, such as
the portable apparatus referred to above, to be used.
Indeed, the cell may be made to have virtually the
same dimensions as the conventional indicator stick
and it is therefore readily acceptable to technicians
familiar with the conventional indicator stick.

Preferably, the transparent cover extends over
only a part of the length of the base member; this
limits the amount of channel which is filled with
the fluid to be tested thereby reducing the consumption
of sample.

If desired, the cell may contain a measured
amount of one or more reagents, preferably in solid,
e.g. freeze dried, form. The limited length of the
transparent cover may be of advantage in this connection
in that it accurately determines the amount of sample
brought into contact with the reagents.

Advantageously the cell according to the invention
comprises a tube of substantially uniform rectangular
cross-section of which one side is transparent and
of which the opposing side is provided with a reflective
surface. Such a tube may, for example, be formed as a one-piece unit or by assembling a number of, e.g. two, units. Preferably the cell will be formed from plastics material in which case it is most desirable to mould or extrude a base member from an opaque reflective plastics material, e.g. white ABS and then to fix a transparent cover slip thereto over at least a portion of the channel formed by the base member, for example by solvent or heat welding. The cover slip may, for example, be formed from clear polycarbonate.

Alternatively, however, the cell may be formed as a one-piece unit by extruding a rectangular tube of clear plastics material and subsequently applying reflective material e.g. paint or plastics material as appropriate, for example to the back of the base member. It may be preferred not to use paint in the channel if there is thought to be a risk of contaminating a sample.

An exemplary embodiment of the invention will be illustrated with reference to the accompanying drawings, wherein

Fig. 1 shows a measuring cell according to the invention and

Fig. 2 shows an enlargement of one end of the cell of Fig. 1.

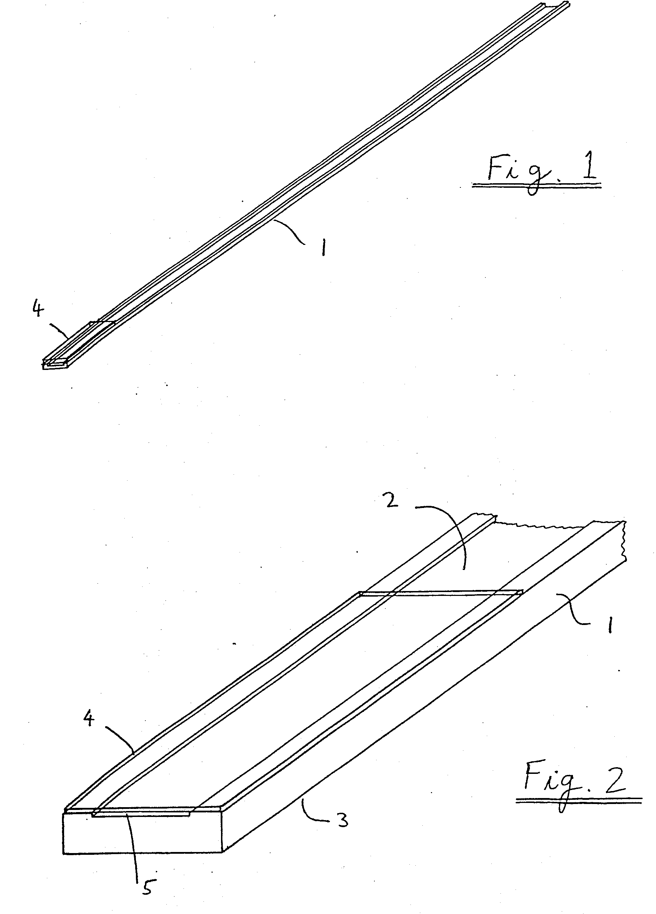

Referring to the drawings, the measuring cell comprises a base member 1 of rectangular cross-section having a channel 2. The base member 1 is preferably formed from opaque reflective material, e.g. white ABS plastics material. Alternatively the base member 1 may be formed from non-reflective material and a reflective surface, e.g. white reflective paint or plastics material, may then be applied to the channel 2 or, if the base member 1 is formed from a transparent material, to the back surface 3 of base member 1. A diffuse reflector is preferred to avoid errors which might be caused by misalignment in the electro-optical measurement apparatus were a shiny reflector used.

- 4 -

The base member 1 has fixed at one end over a portion of the channel 2 a cover slip 4 of transparent material, e.g. polycarbonate. The channel 2 and the cover slip 4 define between them a sample measuring area 5 into which, in use, fluid is drawn by capillary action  The base member 1 incorporating the channel 2 and the cover slip 4 are thus dimensioned to permit such capillary forces to operate whilst still allowing the cell to be easily handled.  It will be appreciated that the capillary forces will depend on the fluid to be tested.  For aqueous fluids suitable dimensions for the base member 1 are, for example about 4 x 100 x 1.00 mm with a channel 2 depth of the order of 0.1 mm. The cover slip 4 may, for example, have dimensions of the order of 4 x 10 x 0.1 mm, although it could easily be considerably thicker, e.g. if required for strength or rigidity.

One or more reagents may be provided in the channel 2, conveniently by printing, e.g. screenprinting, the channel before the cover slip is affixed thereto.

In use the cell is placed with the end carrying the cover slip 4 in the fluid to be tested  The fluid is drawn up by capillary forces into the sample measuring area 5.  This fluid in the sample measuring area 5 is then subjected to optical analysis by passing a beam of light into the sample measuring area 5 through the transparent cover slip 4 and analysing the light reflected back from the reflective surface provided by or on base member 1.  Production and analysis of the light beam may be carried out by conventional methods well known in the art.  Advantageously the cell will be adapted for use in a conventional optical density measuring device.

The cell according to the invention is of particular use in the determination of haemoglobin concentration in blood samples.  A special advantage of the cells according to the invention is that they are not only extremely easy to use but are also relatively cheap to produce. Further, only a small quantity of sample, e.g. 4 microlitres, is required and this is easily available from a pricked finger. Typical prior art measuring systems may require about 20-30 microlitres of sample. Finally, as mentioned above, the amount of sample drawn up may be defined by the length of the cover slip 4 which may be of value when the sample is to react with reagents in the channel 2. A further advantage is that the cell according to the invention can be used to measure the optical density of whole blood as it provides a relatively thin layer. Prior art techniques have required blood to be diluted or lysed for optical density measurement.

Various modifications may be made without departing from the scope of the invention. For example, it might be possible for the cover 4 to end short of the end of the base member. The sample would then be wiped onto the base member channel at the end of the cover; this could be helpful in preventing contamination of the measuring apparatus by fluid on the end of the cell.

0120715

- 6 -

<u>Claims</u>

1.　An optical measuring cell comprising an elongate base member having a channel formed in one face thereof and a transparent cover fixed to the base member over the channel over at least part of the length of the base member, the channel being di-mensioned such that in use fluid to be tested may be drawn by capillary action into the channel and the base member being reflective so that light passing through the cover and fluid is reflected to pass again through the fluid and cover.

2.　An optical measuring cell as claimed in claim 1 wherein the cover extends to at least one end of the base member whereby fluid to be tested may be drawn by capillary action from said at least one end into the channel.

3.　An optical measuring cell as claimed in claim 1 or 2wherein the transparent cover extends over only a part of the length of the base member.

4.　An optical measuring cell as claimed in claim 1, 2 or 3 containing a measured amount of one or more reagents.

5.　An optical measuring cell as claimed in claim 4 wherein the reagent(s) are in solid form.

6.　An optical measuring cell as claimed in any preceding claim wherein the base member is a diffuse reflector.

7.　An optical measuring cell as claimed in any preceding claim in the form of a tube of substantially uniform rectangular cross-section of which one side is transparent and of which the opposing side is provided with a reflective surface.

8.　An optical measuring cell as claimed in claim 7 comprising a base member made from opaque reflective plastics material having a transparent plastics cover fixed thereto.

9.　An optical measuring cell as claimed in claim 7 comprising an extruded clear plastics tube with a reflective coating applied to the back of the base member.

10.    A method of optically analysing a fluid, comprising taking an optical measuring cell as claimed in any preceding claim, placing the cell in the fluid whereby the fluid is drawn by capillary action into the channel, passing light through the transparent cover into the channel and analysing the light reflected back through the transparent cover.

_Fig. 1_

_Fig. 2_